# EUROPÄISCHE PATENTSCHRIFT

(11) **EP 1 963 878 B1**
(45) Veröffentlichungstag und Bekanntmachung des Hinweises auf die Patenterteilung: **28.07.2010**
(21) Anmeldenummer: 06828633.5
(22) Anmeldetag: 08.12.2006
(51) Int. Cl.: G01S 3/02, G01S 3/10

(54) **VERFAHREN ZUR VERIFIKATION VON PEILERGEBNISSEN**
METHOD FOR VERIFYING DIRECTION FINDING RESULTS
PROCEDE POUR VERIFIER DES RESULTATS DE RELEVEMENT

(30) Priorität: 22.12.2005 DE 102005061391
(43) Veröffentlichungstag der Anmeldung: 03.09.2008
(73) Patentinhaber: EADS Deutschland GmbH, 85521 Ottobrunn (DE)
(72) Erfinder: KOTTKE, Thomas, 71139 Ehningen (DE); JUNG, Norbert, 88677 Markdorf (DE); KIENLE, Siegfried, 88682 Salem (DE)
(74) Vertreter: Meel, Thomas
(86) Internationale Anmeldenummer: PCT/DE2006/002183
(87) Internationale Veröffentlichungsnummer: WO 2007/073715

(56) Entgegenhaltungen:
- WO-A-95/14935
- WO-A-96/31010
- WO-A-98/29755
- WO-A-99/33302

## Beschreibung

Die Erfindung betrifft ein Verfahren zur Verifikation von Peilergebnissen nach dem Oberbegriff des Patentanspruch 1.

Mit modernen Peilern können im Falle von Mehrwelleneinfall die Einzelsignale zuverlässig detektiert werden. Derartige Mehrwellendetektion wird heutzutage bei vielen Peilern mit Kreisgruppenantennen durchgeführt. Dabei ist es auch möglich, Signale auf gleichen Frequenzen aus unterschiedlichen Richtungen zu orten. Allerdings kann bei einer solchen Mehrwellendetektion auf derselben Frequenz nicht unterschieden werden, ob es sich um zwei verschiedene Sender handelt oder um Reflexionen desselben Senders, z.B. an einem Hochhaus oder Berg.

In der mobilen Funkkommunikation behilft man sich in solchen Situationen von Mehrwelleneinfall auf derselben Frequenz dadurch, dass nur eines der empfangenen Signale weiterverarbeitet wird (in der Regel dasjenige mit höherem Pegel), während die übrigen unterdrückt werden (so genannte Mehrwellenunterdrückung). Hierbei wird jedoch nicht weiter untersucht, ob es sich um denselben oder verschiedene Sender handelt.

In der WO 96/31010 A1 ist ein Verfahren zur Rekonstruktion von durch Mehrwegausbreitung gestörten Signalen beschrieben. Dabei werden die dominanten der empfangenen Signalkomponenten den zugehörigen Signalquellen mittels eines Verfahrens zugeordnet, das darauf basiert, dass in jedem Signal und somit in jeder Signalkomponente eine Kode enthalten ist.

WO 95/14935 A1 beschreibt ein Positionierungssystem, in dem basierend auf einen n-dimensionalen Mehrdeutigkeitsraum die möglichen Einfallswinkel der direkten Positionierungssignale bestimmt werden und somit den Effekt der Mehrwegsignale teilweise eliminiert wird.

Es ist Aufgabe der Erfindung, ein Verfahren anzugeben, mit dem in Fällen von Mehrwellendetektion auf derselben Frequenz aufgrund von Reflektion an der Umgebung schnell und zuverlässig erkannt werden kann, ob es sich um denselben oder verschiedene Sender handelt.

Diese Aufgabe wird mit dem Gegenstand des Patentanspruch 1 gelöst. Vorteilhafte Ausführungen der Erfindung sind Gegenstand von Unteransprüchen.

Die Erfindung geht aus von den Peilergebnissen, wie sie von einem herkömmlichen Peiler generiert werden. In dem beschriebenen Fall von Mehrwelleneinfall auf derselben Frequenz liegen somit zunächst mehrere detektierte Signale derselben Frequenz aber verschiedenen Richtungen vor. Um zu klären, ob es sich dabei um Signale desselben Senders handelt, falls die Signale an einem Gegenstand reflektiert wurden, oder aber um verschiedene Sender, schlägt die Erfindung vor, ein Vergleich der Signaleigenschaften der aus den verschiedenen Richtungen detektierten Signale durchzuführen.

Bei dem durchzuführenden Vergleich können insbesondere die folgenden Signaleigenschaften verwendet werden:
- zeitliches Verhalten des Signalpegels (insbesondere bei pulsmodulierten Signalen),
- Frequenzspektrum (insbesondere bei breitbandigen Sendern), Modulationsparameter und Modulationsfehler (z.B. error vector)
- demoduliertes Basisbandsignal,
- Dateninhalt des Signals (soweit eine Demodulation möglich ist).

Der Empfang der zum Vergleich benötigten Signalsamples sowie der Vergleich selbst wird auf folgende Weise durchgeführt:
Jedes der aus verschiedenen Richtungen detektierten Signale wird mittels einer separaten Antenne bevorzugt gleichzeitig empfangen. Im Allgemeinen wird man hierfür Richtantennen verwenden, die in die entsprechenden Richtungen (die Richtungsinformation liegt als ein Ergebnis des vorgeschalteten Peilverfahrens vor) ausgerichtet werden. Die auf diese Weise empfangenen Signale werden anschließend untereinander jeweils paarweise verglichen. Die Reihenfolge des Vergleichs der einzelnen Signalpaare wird nach einem vorgegebenen Algorithmus festgelegt, der die relative Stärke der Signale berücksichtigt. So kann vorteilhaft zunächst das stärkste Signal mit dem schwächsten Signal verglichen werden und dass zweitstärkste Signal mit dem zweitschwächsten verglichen werden, dass drittstärkste mit dem drittschwächsten Signal usw..

Direkt empfangenes Signal und reflektiertes Signal weisen stark unterschiedliche Signalpegel auf, wobei der Unterschied im Bereich mehrerer dB liegen wird (typischerweise mehr als 10 dB).

Es ist davon auszugehen, dass das Signal mit dem höchsten Pegel direkt empfangen wurde, während das schwächere Signal mit einer Zeitverzögerung aufgrund der längeren Wegstrecke empfangen wurde. Entsprechend wird man bei einem Signalvergleich mit dem zeitlich letzten Signalabschnitt des schwächeren Signals beginnen und diesen - vom zeitlich letzten Signalabschnitt des stärkeren Signals ausgehend in die umgekehrte Zeitrichtung fortschreitend -mit den einzelnen Signalabschnitten des stärkeren Signals vergleichen. Tritt eine Übereinstimmung auf, kann der Vergleich der Signale bereits abgebrochen werden. Natürlich kann man, um zufällige Übereinstimmungen auszuschließen, das Verfahren auch solange fortsetzen, bis sich eine Übereinstimmung in mehr als einem Signalabschnitt ergibt. Tritt keine Übereinstimmung auf, wird das Verfahren mit dem nächsten Signalabschnitt (hier: dem zeitlich zweitletzten Signalabschnitt des schwächeren Signals) fortgeführt, der der Reihe nach (zeitlich gesehen von hinten nach vorne) mit den einzelnen Signalabschnitten des stärkeren Signals verglichen wird.

Völlig analog zu dem beschriebenen Verfahren kann man auch mit dem zeitlich gesehen ersten Signalabschnitt des stärkeren Signals beginnen, und diesen - vom zeitlich gesehen ersten Signalabschnitt des schwächeren Signals ausgehend in Zeitrichtung fortschreitend - mit den einzelnen Signalabschnitten des schwächeren Signals vergleichen.

Durch die beschriebenen Vorgehensweisen kann die Anzahl der durchzuführenden Vergleiche reduziert werden.

Im Spezialfall von genau zwei detektierten Signalen, welche unterschiedliche Pegel aufweisen, kann das Signal mit dem höheren Pegel mittels einer ungerichteten Antenne empfangen werden. Durch die unterschiedlichen Pegel ist hier eine Unterdrückung des schwächeren Signals ohne weiteres möglich. Das Signal mit dem niedrigeren Pegel wird mit einer Richtantenne, die in die bekannte Einfallsrichtung dieses Signals ausgerichtet ist, empfangen.

Weisen die beiden zu vergleichenden Signale gleiche oder ähnliche Signalpegel auf, werden beide Signale jeweils mit einer Richtantenne empfangen, die jeweils in die bekannte Empfangsrichtung ausgerichtet werden.

Durch den Einsatz von Signalfiltermethoden ist es auch möglich, beide Signale jeweils mit einer ungerichteten Antenne zu empfangen, so dass auf die Verwendung von Richtantennen verzichtet werden kann.

Ist die Zahl der aus verschiedenen Richtungen detektierten Signale größer ist als die Zahl der zu ihrem Empfang vorhandenen Antennen, so werden zunächst so viele Signale gleichzeitig empfangen, wie Antennen vorhanden sind. Anschließend erfolgt der Vergleich jeweils zweier Signale wie oben beschrieben. Die Reihenfolge der zu vergleichenden Signalpaare wird nach einem vorgegebenen Algorithmus festgelegt, der die relative Stärke der Signale berücksichtigt.

Vorteilhaft wird das stärkste Signal gleichzeitig mit dem schwächsten Signal empfangen und verglichen und dass das zweitstärkste Signal gleichzeitig mit dem zweitschwächsten empfangen und verglichen, usw.

Anstatt des erneuten Empfangs der detektierten Signale ist es gemäß einer alternativen Ausführungsform aber auch möglich, den Vergleich der Signaleigenschaften auf der Basis von zwischengespeicherten Signal-Rohdaten des Peilverfahrens durchzuführen, welches dem erfindungsgemäßen Verfahren vorgeschaltet ist.

Durch das erfindungsgemäße Verfahren kann schnell und zuverlässig erkannt werden, ob es sich um einen zweiten Sender oder nur um eine Reflektion des ersten Senders handelt. Dadurch wird das Lagebild bei einer Peilung eindeutiger, was besonders bei schwierigen Umgebungseinflüssen (Stadt mit vielen Sendern und vielen Reflexionen, Gebirge mit vielen Reflexionen, etc) von großer Bedeutung ist. In vielen. Fällen kann diese Information gewonnen werden, ohne die Modulationsart zu kennen oder gar die Nachricht zu demodulieren.

Die Erfindung wird anhand von Ausführungsbeispielen unter Bezugnahme auf Fig. näher erläutert. Es zeigen:
- Fig. 1: Mehrwegempfang auf gleichen Frequenzen aufgrund zweier Sender (Fig. 1 b) und aufgrund einer Reflexion (Fig. 1 a),
- Fig. 2: Empfang des schwächeren Signals durch eine Richtantenne und Empfang des stärkeren Signals durch eine ungerichtete Antenne (bei Vorhanden- sein nur eines einzigen Senders),
- Fig. 3: Empfang des schwächeren Signals durch eine Richtantenne und Empfang des stärkeren Signals durch eine ungerichtete Antenne (bei Vorhanden- sein zweier Sender),
- Fig. 4: Empfang zweier Signale mit vergleichbaren Signalpegeln durch zwei Richtantennen.

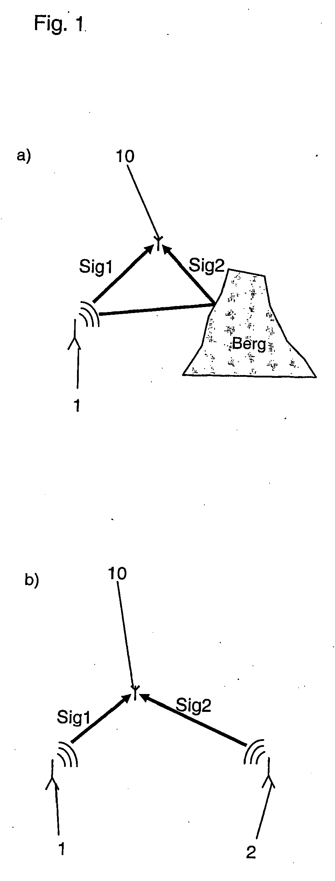

Fig. 1 zeigt, wie bereits in der Beschreibungseinleitung erläutert, die beiden Fälle, welche mit Hilfe des erfindungsgemäßen Verfahrens unterschieden werden sollen. Werden bei der Peilung mittels Peilantenne 10 mehrere Signale Sig1,Sig2 derselben Frequenz aus verschiedenen Richtungen detektiert, so kann es sich entweder um denselben Sender 1 handeln, dessen Signale z.B. an einem Berg reflektiert wurden (Fig. 1 a) oder es handelt sich um zwei verschiedene Sender 1,2 (Fig. 1 b).

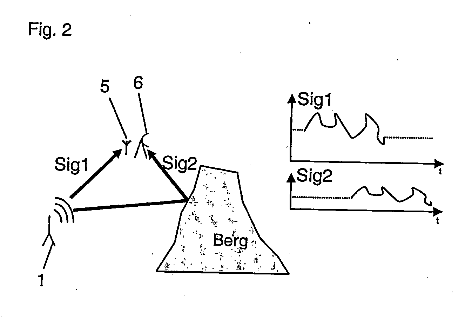

Fig. 2 zeigt eine konkrete Situation beim Einsatz des erfindungsgemäßen Verfahrens. Aus dem Peilverfahren, welches dem erfindungsgemäßen Peilverfahren vorgeschaltet ist, wurden als Peilergebnisse zwei Signale Sig1, Sig2 aus verschiedenen Richtungen aber derselben Frequenz ermittelt. Die Signalpegel waren dabei von unterschiedlicher Größe. Zur Verifizierung dieser Peilergebnisse wird nun gemäß dem erfindungsgemäßen Verfahren mittels einer ungerichteten Antenne 5 das stärkere der beiden Signale, nämlich Signal Sig1 empfangen. Bei der ungerichteten Antenne 5 kann es sich vorteilhaft um dieselbe Peilantenne handeln, mit dem das dem erfindungsgemäßen Verfahren vorgeschaltete Peilverfahren durchgeführt wurde. Dies kann z.B. eine Kreisgruppenantenne sein. Danach oder gleichzeitig wird eine Richtantenne 6 in die bekannte Richtung des zweiten Signals Sig2 ausgerichtet und das Sig2 empfangen. Die Signalverläufe der beiden Sig1,2 über der Zeit sind in Fig. 2 schematisch dargestellt. Man erkennt, dass Sig2 gegenüber Sig1 zeitverzögert und gedämpft empfangen wird. Ein Vergleich von einzelnen Signalsamples der beiden Signale ergibt, dass das zeitliche Verhalten der beiden Signale ansonsten aber identisch ist. Es kann somit mit hoher Wahrscheinlichkeit verifiziert werden, dass es sich bei den beiden Signalen um denselben Sender 1 handelt. Durch den Vergleich mehrerer Signalsamples kann der Fall einer zufälligen Übereinstimmung in nur einem Signalsample ausgeschlossen werden.

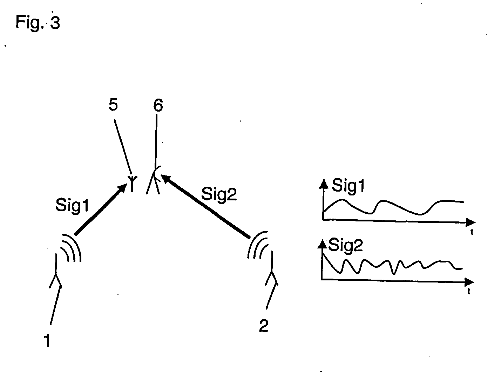

Fig. 3 zeigt eine Situation, bei der die durch das Peilverfahren ermittelten Signale auf zwei unterschiedliche Sender 1,2 zurückgehen. Die Signalverläufe der beiden Signale Sig1, Sig2 über der Zeit sind wieder schematisch (nicht maßstabsgerecht) dargestellt. Nach dem die beiden Signale mittels Rundantenne 5 sowie Richtantenne 6 empfangen wurden, kann der Vergleich der beiden Signale Sig1, Sig2 durchgeführt werden. Im vorliegenden Fall ergibt dieser Vergleich auf der Basis des zeitlichen Verlaufs des Signalpegels eindeutig, dass keine Ähnlichkeiten bestehen, so dass es sich um zwei verschiedene Sender 1,2 handeln muss.

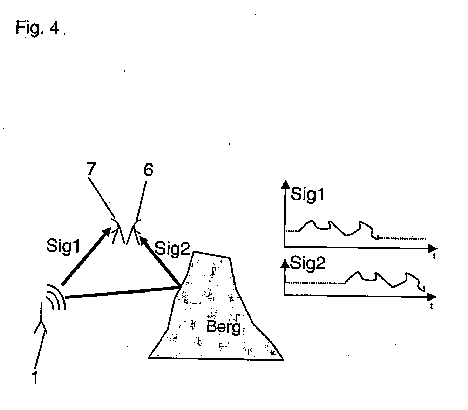

Fig. 4 zeigt den Fall, dass die mit dem Peilverfahren ermittelten Signale Sig1, Sig2 einen gleichen oder annähernd gleichen Signalpegel aufweisen. Da in diesem Falle eine Trennung der beiden Signale Sig1,Sig2 bei Einsatz einer ungerichteten Antenne nicht ohne weiteres möglich ist, werden die beiden Signale jeweils mit einer Richtantennen 7,6 empfangen.

## Patentansprüche

1. Verfahren zur Verifikation von Peilergebnissen, im Falle, dass mehrere Signale (Sig1,Sig2) derselben Frequenz aus verschiedenen Richtungen detektiert wurden, wobei ein Vergleich der Signaleigenschaften der aus den verschiedenen Richtungen detektierten Signale (Sig1,Sig2) durchgeführt wird, so dass anhand des Signalvergleichs entschieden werden kann, ob es sich um Reflektion desselben Senders (1,2) oder um verschiedener Sender (1,2) handelt, **dadurch gekennzeichnet, dass**
- jedes der aus verschiedenen Richtungen detektierten Signale (Sig1 ,Sig2) mittels einer separaten Antenne (5,6) empfangen und anschließend die empfangenen Signale (Sig1,Sig2) miteinander verglichen werden, wobei
- die Signale (Sig1,Sig2) paarweise verglichen werden, und die Reihenfolge des Vergleichs der Signalpaare nach einem vorgegebenen Algorithmus festgelegt ist, der die relative Stärke der Signale berücksichtigt.

2. Verfahren nach Anspruch 1, **dadurch gekennzeichnet, dass** eine oder mehrere der folgenden Signaleigenschaften zum Vergleich der aus verschiedenen Richtungen detektierten Signale (Sig1,Sig2) verwendet wird:
- zeitliches Verhalten des Signalpegels,
- Frequenzspektrum,
- Modulationsparameter,
- Basisbandsignal,
- Dateninhalt des Signals.

3. Verfahren nach einem der vorangehenden Ansprüche, **dadurch gekennzeichnet, dass** zunächst das stärkste Signal mit dem schwächsten Signal verglichen wird, und dass zweitstärkste Signal mit dem zweitschwächsten verglichen wird, usw.

4. Verfahren nach einem der vorangehenden Ansprüche, **dadurch gekennzeichnet, dass** im Falle von genau zwei aus verschiedenen Richtungen detektierten Signalen (Sig1,Sig2) mit unterschiedlichen Signalpegeln das stärkere Signal mittels einer nicht gerichteten Antenne (5) empfangen wird und das schwächere Signal mittels einer Richtantenne (6) empfangen und die empfangenen Signale (Sig1,Sig2) anschließend miteinander verglichen werden.

5. Verfahren nach einem der vorangehenden Ansprüche, **dadurch gekennzeichnet, dass** im Falle von genau zwei aus verschiedenen Richtungen detektierten Signalen (Sig1,Sig2) gleicher Signalpegel beide Signale mittels jeweils einer Richtantennen (6,7) empfangen und die empfangenen Signale (Sig1,Sig2) anschließend miteinander verglichen werden.

6. Verfahren nach einem der Ansprüche 1 oder 2, **dadurch gekennzeichnet, dass** die Zahl der aus verschiedenen Richtungen detektierten Signale größer ist als die Zahl der zu ihrem Empfang verwendeten Antennen, wobei die Reihenfolge des Empfangs und Vergleichs der einzelnen Signalpaare nach einem vorgegebenen Algorithmus festgelegt ist, der die relative Stärke der Signale berücksichtigt.

7. Verfahren nach Anspruch 6, **dadurch gekennzeichnet, dass** das stärkste Signal gleichzeitig mit dem schwächsten Signal empfangen und verglichen wird, und dass das zweitstärkste Signal gleichzeitig mit dem zweitschwächsten empfangen und verglichen wird, usw.

8. Verfahren nach Anspruch 1 oder 2, **dadurch gekennzeichnet, dass** der Vergleich der Signaleigenschaften auf der Basis von zwischengespeicherten Rohdaten des vorangehenden Peilverfahrens durchgeführt wird.

## Claims

1. Method for verification of direction-finder results, in the situation in which a plurality of signals (Sig1, Sig2) have been detected at the same frequency from different directions, wherein a comparison of the signal characteristics of the signals (Sig1, Sig2) detected from the different directions is carried out such that it is possible to use the signal comparison to decide whether this relates to a reflection from the same transmitter (1, 2) or from different transmitters (1, 2) **characterized in that**
- each of the signals (Sig1, Sig2) detected from different directions is received by means of a separate antenna (5, 6), and the received signals (Sig1, Sig2) are then compared with one another, wherein
- the signals (Sig1, Sig2) are compared in pairs, and the sequence of the comparison of the signal pairs is defined on the basis of a predetermined algorithm which takes account of the relative strength of the signals.

2. Method according to Claim 1, **characterized in that** one or more of the following signal characteristics is or are used for comparison of the signals (Sig1, Sig2) detected from different directions:
- time response of the signal level,
- frequency spectrum,
- modulation parameters,
- baseband signal,
- data content of the signal.

3. Method according to one of the preceding claims, **characterized in that** the strongest signal is first of all compared with the weakest signal, and **in that** the second-strongest signal is compared with the second-weakest signal, etc.

4. Method according to one of the preceding claims, **characterized in that**, in the situation in which two and only two signals (Sig1, Sig2) which are detected from different directions are received with different signal levels, the stronger signal is received by means of a non-directional antenna (5), and the weaker signal is received by means of a directional antenna (6), and the received signals (Sig1, Sig2) are then compared with one another.

5. Method according to one of the preceding claims, **characterized in that**, in the situation in which two and only two signals (Sig1, Sig2) are detected from different directions with the same signal level, both signals are received by means of in each case one directional antenna (6, 7), and the received signals (Sig1, Sig2) are then compared with one another.

6. Method according to one of Claims 1 or 2, **characterized in that** the number of signals detected from different directions is greater than the number of antennas used for their reception, wherein the sequence of reception and comparison of the individual signal pairs is defined on the basis of a predetermined algorithm which takes account of the relative strength of the signals.

7. Method according to Claim 6, **characterized in that** the strongest signal is received at the same time as and compared with the weakest signal, and **in that** the second-strongest signal is received at the same time as and is compared with the second-weakest signal, etc.

8. Method according to Claim 1 or 2, **characterized in that** the signal characteristics are compared on the basis of buffer-stored raw data from the previous direction-finding process.

## Revendications

1. Procédé de vérification des résultats d'un relèvement dans le cas où plusieurs signaux (Sig1, Sig2) à la même fréquence ont été détectés depuis des directions différentes, une comparaison des propriétés des signaux (Sig1, Sig2) détectés depuis les différentes directions étant effectuée de sorte que la comparaison des signaux permet de décider s'il s'agit d'une réflexion du même émetteur (1, 2) ou d'émetteurs (1, 2) différents, **caractérisé en ce que**
- chacun des signaux (Sig1, Sig2) détectés depuis des directions différentes est reçu au moyen d'une antenne (5, 6) séparée et les signaux (Sig1, Sig2) reçus sont ensuite comparés entre eux,
- les signaux (Sig1, Sig2) étant comparés par paire et l'ordre de comparaison des paires de signaux étant déterminé d'après un algorithme prédéfini qui tient compte de l'intensité relative des signaux.

2. Procédé selon la revendication 1, **caractérisé en ce qu'**une ou plusieurs des propriétés de signal suivantes sont utilisées pour comparer les signaux (Sig1, Sig2) détectés depuis des directions différentes :
- comportement dans le temps du niveau du signal,
- spectre de fréquences,
- paramètres de modulation,
- signal en bande de base,
- contenu des données du signal.

3. Procédé selon l'une des revendications précédentes, **caractérisé en ce que** le signal le plus puissant est tout d'abord comparé avec le signal le plus faible et que le deuxième signal le plus puissant est comparé avec le deuxième signal le plus faible, etc.

4. Procédé selon l'une des revendications précédentes, **caractérisé en ce que** dans le cas de deux signaux (Sig1, Sig2) détectés depuis des directions différentes qui présentent des niveaux de signal différents, le signal le plus puissant est reçu au moyen d'une antenne non directionnelle (5) et le signal le plus faible est reçu au moyen d'une antenne directionnelle (6) et les signaux (Sig1, Sig2) reçus sont ensuite comparés entre eux.

5. Procédé selon l'une des revendications précédentes, **caractérisé en ce que** dans le cas de deux signaux (Sig1, Sig2) détectés depuis des directions différentes qui présentent le même niveau de signal, les deux signaux sont respectivement reçus au moyen d'une antenne directionnelle (6, 7) et les signaux (Sig1, Sig2) reçus sont ensuite comparés entre eux.

6. Procédé selon l'une des revendications 1 ou 2, **caractérisé en ce que** le nombre de signaux détectés depuis des directions différentes est supérieur au nombre d'antennes utilisées pour leur réception, l'ordre de réception et de comparaison des paires de signaux individuelles étant déterminé d'après un algorithme prédéfini qui tient compte de l'intensité relative des signaux.

7. Procédé selon la revendication 6, **caractérisé en ce que** le signal le plus puissant est reçu simultanément puis comparé avec le signal le plus faible et que le deuxième signal le plus puissant est reçu simultanément puis comparé avec le deuxième signal le plus faible, etc.

8. Procédé selon la revendication 1 ou 2, **caractérisé en ce que** la comparaison des propriétés des signaux est effectuée en se basant sur les données brutes mémorisées temporairement du relèvement précédent.
